# EUROPEAN PATENT SPECIFICATION

(11) **EP 2 578 007 B1**
(45) Date of publication and mention of the grant of the patent: **15.04.2020**
(21) Application number: 11790023.3
(22) Date of filing: 01.06.2011
(51) Int. Cl.: H04L 29/06, H04W 12/04, H04W 12/06, H04L 9/08, H04W 4/70

(54) **SECURING GROUP COMMUNICATION IN A MACHINE-TO-MACHINE COMMUNICATION ENVIRONMENT**
SICHERUNG EINER GRUPPENKOMMUNIKATION IN EINER MASCHINE-ZU-MASCHINE-KOMMUNIKATIONSUMGEBUNG
SÉCURISATION DE COMMUNICATION DE GROUPE DANS UN ENVIRONNEMENT DE COMMUNICATION MACHINE À MACHINE

(30) Priority: 01.06.2010 IN 1508CH2010
(43) Date of publication of application: 10.04.2013
(73) Proprietor: Samsung Electronics Co., Ltd., Gyeonggi-do 443-742 (KR)
(72) Inventor: RAJADURAI, Rajavelsamy, Byrasandra Bangalore 560093 (IN); LIM, Han-Na, Gyeonggi-do 443-742 (KR)
(74) Representative: Nederlandsch Octrooibureau
(86) International application number: PCT/KR2011/004021
(87) International publication number: WO 2011/152665

(56) References cited:
- US-A1- 2008 153 521
- US-A1- 2009 217 348
- US-A1- 2010 011 063
- US-A1- 2010 057 485
- HARDJONO VERISIGN B WEIS CISCO T: "The Multicast Group Security Architecture; rfc3740.txt", NETWORK WORKING GROUP RFC 1717, INTERNET SOCIETY (ISOC) 4, RUE DES FALAISES CH- 1205 GENEVA, SWITZERLAND, CH, 1 March 2004 (2004-03-01), XP015009520, ISSN: 0000-0003
- ALCATEL-LUCENT SHANGHAI BELL ET AL: "Network improvement for group based mobility", 3GPP DRAFT; S2-100410_NETWORK IMPROVEMENT FOR GROUP BASED MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Shenzhen, China; 20100118 - 20100122, 12 January 2010 (2010-01-12), XP050630490, [retrieved on 2010-01-12]
- HUAWEI ET AL: "Requirements of NIMTC security", 3GPP DRAFT; S3-100491 NIMTC REQUIREMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Lisbon; 20100426, 19 April 2010 (2010-04-19), XP050436765, [retrieved on 2010-04-19]
- ZTE: "The group bearer for MTC", 3GPP DRAFT; S2-100094_GROUP BEARER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Shenzhen; 20100118, 12 January 2010 (2010-01-12), XP050432722, [retrieved on 2010-01-12]

## Description

### Technical Field

The present invention relates to the field of machine to machine (M2M) communication, and more particularly relates to group communication in a M2M environment.

### Background Art

Machine-to-Machine (M2M) communication (also referred to as "machine-type communications" or "MTC") is a form of data communication between devices that do not necessarily need human interaction (commonly known as MTC devices). For example, in an M2M communication, a MTC device (such as a sensor or meter) may capture an event data which is then relayed through an operator network to an application residing in a MTC server for analysis and necessary action. Typically, the MTC device and the MTC server communicate with each other using an operator network based on network technologies such as Third Generation Partnership Project (3GPP) technologies such as Global System for Mobile Communications (GSM), Universal Mobile Telecommunications System (UMTS), Long Term Evolution (LTE), and so on.

M2M communication may be used in a variety of areas such as smart metering systems (e.g., in applications related to power, gas, water, heating, grid control, and industrial metering), surveillance systems, order management, gaming machines, and health care communication. Additionally, M2M communication based on machine type communication (MTC) technology may be used in areas such as customer service.

Recent advancement in M2M communication has enabled grouping of MTC devices together such that the operator of MTC devices can easily manage MTC devices belonging to the same group. For example, a MTC server can be linked to production plants (employing MTC devices) together to monitor and maximize production. The MTC devices belonging to the same group can be in a same location, have same MTC features and/or belong to the same MTC user. This provides flexibility to allocate a group and hence may provide easier mode to control/update/charge the MTC devices in a granularity of a group. Thus, redundant signalling may be significantly reduced to avoid congestion.

In a MTC group, it is desirable that the MTC devices are securely addressed for control, management, or charging facilities. However, currently, one or more group messages are broadcasted to the MTC devices in an insecure manner, which may sometimes lead to spoofing of group messages.

The 3GPP document titled "The group bearer for MTC" by ZTE, presented at 3GPP TSG SA WG2 Meeting #77 dated 18-22 January 2010, discloses that MTC Devices can be grouped together for the control, management or charging facilities etc. to meet the need of operators. The group bearer can be controlled, managed or charged in a granularity of group instead of each MTC Device. The MTC devices established group bearers should be located in the same eNodeB and are controlled by the same MME.

The document "The Multicast Group Security Architecture", published in 2004, discloses three separate group security associations - Registration SA (REG), re-key SA (REKEY) and data security SA (DATA); and a group controller and key server (GCKS) responsible for issuance and management of cryptographic keys.

### Disclosure of Invention

### Technical Problem

An aspect of the present invention is to provide a method and MME for securing group communication in a machine-to-machine communication environment.

### Solution to Problem

The present invention is defined by the subject matter of the independent claims. Preferred embodiments are defined by the dependent claims.

### Brief Description of Drawings

The above and other aspects, features and advantages of certain exemplary embodiments of the present invention will be more apparent from the following description taken in conjunction with the accompanying drawings, in which:
Figure 1 is a block diagram illustrating a machine-to-machine (M2M) communication environment for securing group communication with machine type communication (MTC) devices belonging to a MTC group, according to one embodiment.
Figure 2 is a process flowchart illustrating an exemplary method of securing group communication between a MTC server and the MTC devices belonging to the MTC group, according to one embodiment.
Figure 3a and 3b are a flow diagram illustrating distributing a unique group key to MTC devices in a MTC group using a non-access stratum (NAS) security mode command (SMC) procedure in a long term evolution (LTE) network, according to one embodiment.
Figure 4a and 4b are a flow diagram illustrating distributing a unique group key to MTC devices in a MTC group using a NAS SMC procedure, according to another embodiment.
Figure 5a and 5b are a flow diagram illustrating distributing a unique group key to MTC devices in a MTC group using a protocol configuration options (PCO), according to another embodiment.

The drawings described herein are for illustration purposes only and are not intended to limit the scope of the present disclosure in any way.

### Mode for the Invention

The present invention provides a method and MME for securing communication in a machine-to-machine (M2M) communication environment. In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

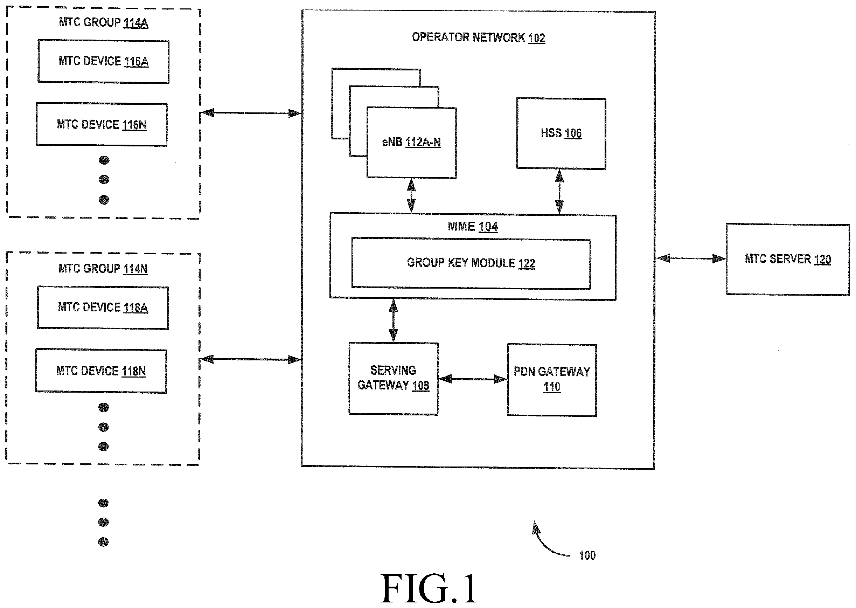

Figure 1 is a block diagram illustrating a M2M communication environment 100 for securing group communication with MTC devices belonging to a MTC group, according to one embodiment. In Figure 1, the M2M communication environment 100 includes an operator network 102, MTC groups 104A-N and a MTC server 106. The operator network 102 illustrated herein is a long term evolution network and hence includes a mobile management entity (MME) (e.g., a network entity) 104, a home subscriber server (HSS) 106, a serving gateway 108, a packet data network (PDN) gateway 110, one or more eNB terminals 112A-N. It can be understood that, the operator network 102 can be a Global System for Mobile Communications (GSM) network, a Universal Mobile Telecommunications System (UMTS) network, a Worldwide Interoperability for Microwave Access (WiMAX) network and the like.

The MTC groups 104A-N are formed by grouping a plurality of MTC devices associated with the operator network 102. For example, the operator network 102 may form a MTC group 114A including MTC devices 116A-N and a MTC group 114B including MTC devices 118A-N based on user, location and features associated with the MTC devices 116A-N and 118A-N.

The MTC server 120 communicates with the MTC devices 116A-N and 118A-N based on MTC group(s) to which it belongs. It can be noted that, one or more MTC devices may belong to more than one MTC group. In these embodiments, the operator network 102 enables the MTC server 120 or any other network entity to securely communicate with MTC devices belonging to the MTC groups 114A-N.

For the purpose of illustration, consider that the MTC server 120 has to send a group message to the MTC devices 116A-N belonging to the MTC group 114A via the operator network 102. In order to securely communicate the group message, a group key module 112 in the MME 104 identifies a MTC group associated with the MTC devices 116A-N. The group key module 112 may identifies the MTC group 114A by obtaining the information associated with the MTC group 114A from the HSS 106 or a source MME or Serving GPRS Support Node (SGSN). If the MTC group 114A is formed by the HSS 106, then the information associated with the MTC group 114A is obtained from the HSS 106. Accordingly, the group key module 112 generates a unique group key based on the information (e.g., group identifier) associated with the MTC group 114A. The unique group key identifier is provided with a validity period. The validity period indicates duration of time for which the unique group key is valid.

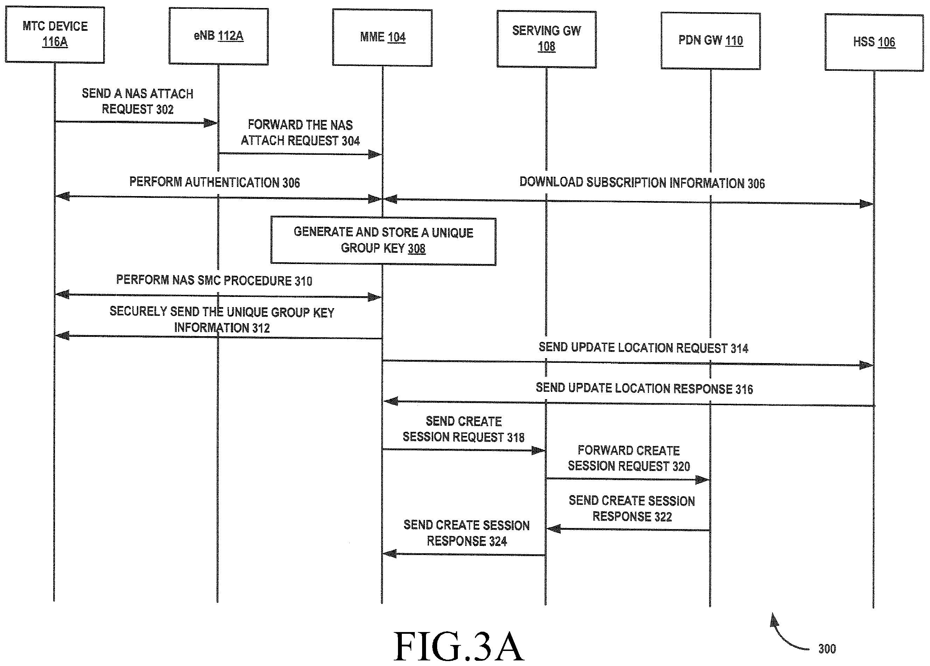

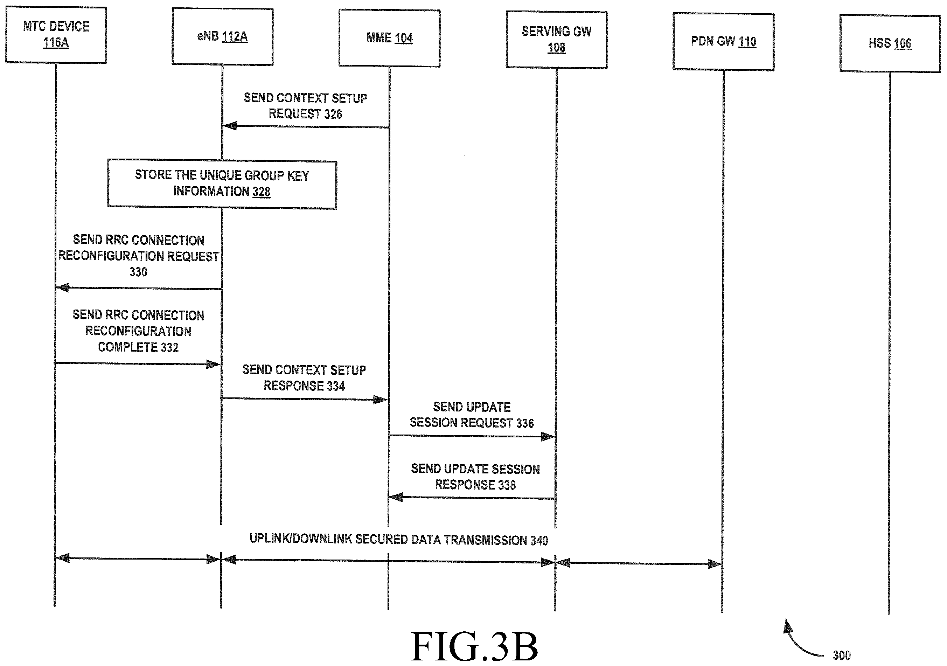

Then, the group key module 112 securely distributes the unique group key information to the MTC devices 116A-N associated with the MTC group 114A via an associated eNB (e.g., the eNB 112A). For example, the unique group key information includes unique group key, an index value associated with the unique group key, validity period associated with the unique group key, and selected security algorithm for group message protection. In some embodiments, the unique group key information is securely distributed to the MTC devices 116A-N using a non access stratum (NAS) security mode command (SMC) procedure, a new MTC group SMC procedure, or a protocol configuration options (PCO) as will be illustrated in Figures 3 through 5. Upon secured distribution, the group key module 112 also communicates the unique group key information associated with the MTC group 114A to the associated eNB 112A, whereby the eNB 112A stores the unique group key information in its memory for further use.

Accordingly, when a group message(s) is received from the MTC server 120, the eNB 114 encrypts the group message(s) using the unique group key information and broadcast the encrypted group message(s) to the MTC devices 116A-N. Thus, the group message(s) are protected from spoofing. When each of the MTC devices 116A-N receives the encrypted group message(s), each of the MTC devices 116A-N decrypts the encrypted group message(s) using the unique group key information received from the operator network 102 for further processing. In this manner, data communication of group messages is performed in a secured manner using the unique group key information. It can be noted that, if the unique group key is carrying a validity period, the group key module 122 generates a new group key and an index associated with the new group key and distributes the same prior to expiry of the validity period as the manner explained above.

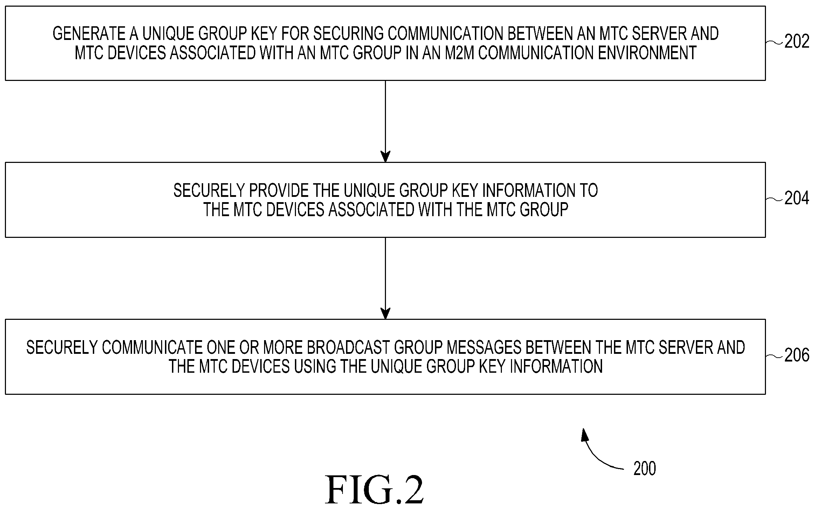

Figure 2 is a process flowchart illustrating an exemplary method 200 of securing group communication between the MTC server 120 and the MTC devices 116A-N belonging to the MTC group 114A, according to one embodiment. At step 202, a unique group key is generated for securing communication between the MTC server 120 and the MTC devices 116A-N associated with the MTC group 114A in the M2M communication environment. In one exemplary implementation, the unique group key is generated based upon receipt of non-access stratum (NAS) attach request message from one of the MTC devices 116A-N (e.g., a first member of the MTC group 114A) and performing a network access authentication procedure.

At step 204, the unique group key information is securely provided to the MTC devices 116A-N associated with the MTC group 114A. In one embodiment, the unique group key information is encrypted using a non-access stratum (NAS) security context established between said one of the MTC device 116A-N and the MME 104. At step 206, one or more broadcast group messages are securely communicated between the MTC server 120 and the MTC devices 116A-N using the unique group key information.

Figure 3a and 3b are a flow diagram 300 illustrating distributing a unique group key to MTC devices in a MTC group using a non-access stratum (NAS) security mode command (SMC) procedure in a LTE network, according to one embodiment. At step 302, a MTC device 116A sends a NAS attach request message to an eNB 112A. For example, the NAS attach request message is sent at the end of a radio resource control (RRC) connection set procedure. At step 304, the eNB 112A forwards the NAS attach request message to the MME 104. At step 306, the MME 104 performs a network access authentication procedure with the MTC device 116A. During the authentication procedure, the MME 104 downloads subscription information from the HSS 106. For example, the subscription information includes a group identifier associated with a MTC group to which the MTC belongs to.

At step 308, the MME 104 generates a unique group key per group (Gkey) and assigns a group key index (Gki) to the unique group key (e.g., if the key is not generated previously for the MTC group). Alternatively, if the unique group key is already generated, the MME 104 retrieves the previously stored unique group key for the MTC device 116A. Also, at step 308, the MME 104 stores the group information for NAS level protection of group messages for the MTC group 114A. In one embodiment, the MME 104 may derive cryptographic keys from the unique group key for userplane, NAS and AS message protection. In another embodiment, the MME 104 may dynamically form a new group based on the subscriber information and MTC feature subscribed. For example, the MME creates the MTC group for MTC devices accessing the MTC server 120 from a particular location.

At step 310, the MME 104 performs a NAS SMC procedure with the MTC device 116A to activate integrity protection and NAS ciphering. At step 312, the MME 104 securely communicates the unique group key information (e.g., group identifier, Gkey, and Gki) in a group SMC message to the MTC device 116A. It can be noted that, the group SMC message including the unique group key information can also be sent during the NAS SMC procedure. In some embodiments, the unique group key information is protected by a NAS security context established between the MTC device 116A and the MME 104. In these embodiments, the unique group key information is encrypted by the NAS security context such that only the MTC device 116A can decrypt it. In one embodiment, the group SMC message also includes selected security algorithms (integrity protection and encryption algorithms) for group message protection. It is appreciated that, the MME 104 is also capable of initiating a group SMC procedure at any point of time to refresh or to assign a new group key (Gkey) and related information. It is understood that, the decision to refresh the unique group key based on validity period or based on number of messages protected or based on number of MTC devices attached or detached or wrap-around of a count value. Moreover, the unique group key is refreshed based on configuration option and operator policy.

At step 314, the MME 104 sends an update location request to the HSS 106. At step 316, the HSS 106 sends an update location acknowledgment including subscription information associated with the MTC device 116A to the MME 104. At step 318, the MME 104 sends a create session request to the serving gateway 108 for creating a default bearer. The create session request may include IMSI, E-RAB setup list (E-RAB ID), and Group ID. At step 320, the serving gateway 108 forwards the create session request to the PDN gateway 110. The forwarded create session request may include IMSI, E-RAB ID, Group ID, S5 downlink information and so on. The S5 downlink information includes internet protocol (IP) address of the serving gateway 108 and GTP-U TEID.

Accordingly, at step 322, the PDN gateway 110 sends a create session response (e.g., including Enhanced Radio Access Bearer Identity (E-RAB ID), common S5 uplink information, etc.) to the serving gateway 108 in response to the create session request. The serving gateway 108 then forwards the create session response (e.g., including E-RAB ID, common S1 uplink information, etc.) to the MME 104, at step 324. At step 326, the MME 104 sends a context setup message (including NAS attach accept, E-RAB setup list, unique group key information, S1 uplink information, etc.) to the eNB 112A. At step 328, the eNB 112A stores the unique group key information for group message protection.

At step 330, the eNB 112A performs a RRC connection reconfiguration procedure with the MTC device 116A. At step 332, the MTC device 116A sends a RRC connection reconfiguration complete message to the eNB 112A. Upon completion, the eNB 112A sends a context setup response including E-RAB setup list (e.g., E-RAB ID, S1 downlink information and so on) to the MME 104, at step 334. For example, the S1 downlink information includes Internet Protocol (IP) address of the eNB 112A and General Packet Radio Service (GPRS) Tunnelling Protocol Tunnel Endpoint Identifier (GTP-U TEID).

At step 336, the MME 104 sends an update session request (e.g., IMSI, E-RAB ID, S1 downlink information, etc.) to the serving gateway 108. Accordingly, at step 338, the serving gateway 108 sends an update session response to the MME 104 in response to the update session request. At step 340, uplink and downlink data transmission between the MTC server 120 and the MTC device 116A is performed in a secured manner using the unique group key information, as explained in Figure 1. It can be noted that, the MTC device 116A deletes the unique group key information when the MTC device detaches from the operator network 102.

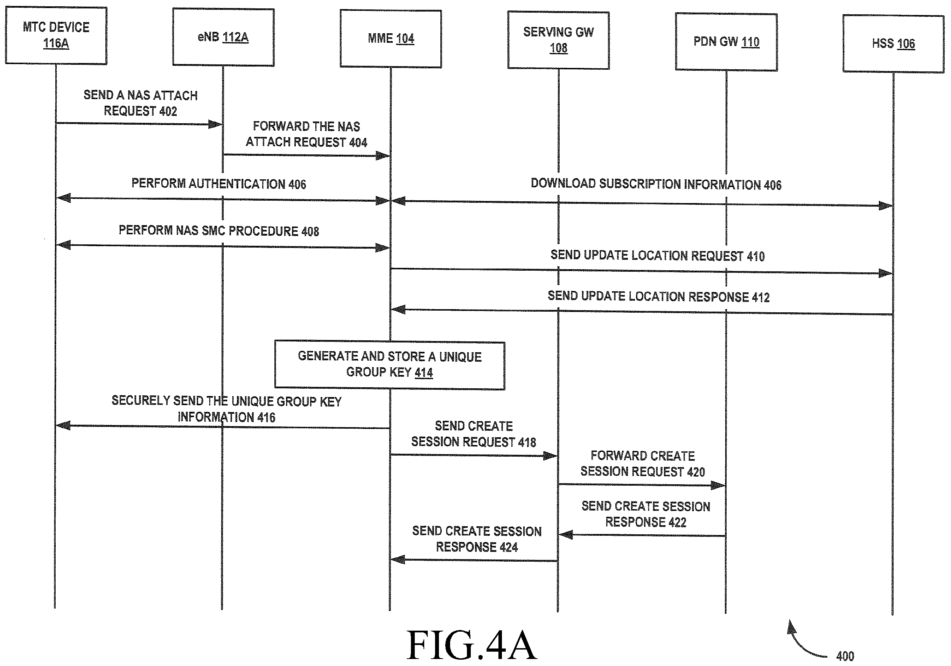

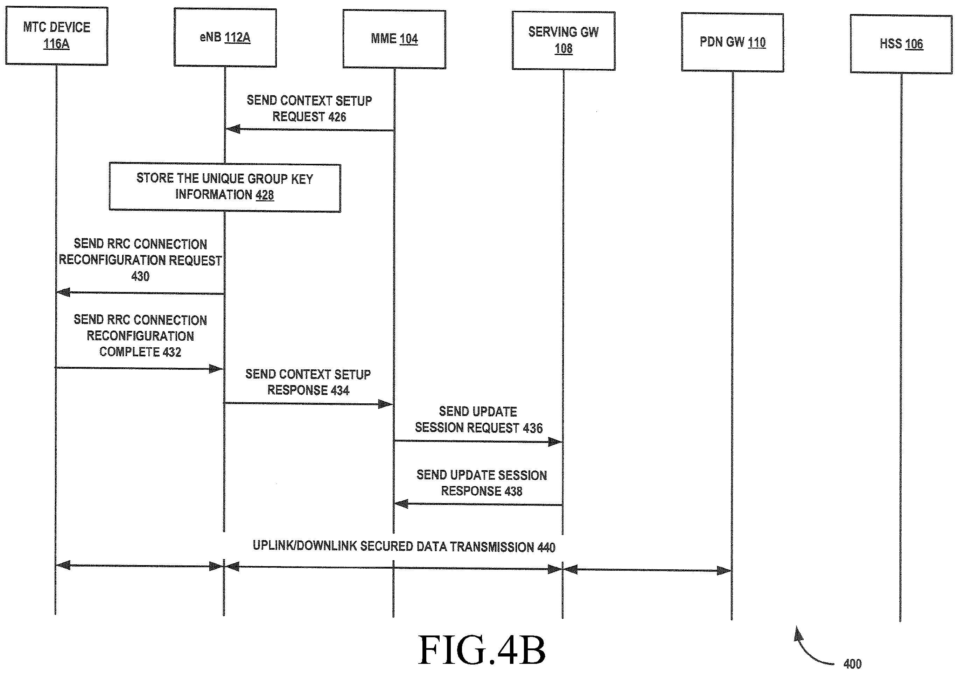

Figure 4a and 4b are a flow diagram 400 illustrating distributing a unique group key to MTC devices in a MTC group using a NAS SMC procedure, according to another embodiment. At step 402, a MTC device 116A sends a NAS attach request message to an eNB 112A. For example, the NAC attach request message is sent at the end of a radio resource control (RRC) connection set procedure. At step 404, the eNB 112A forwards the NAS attach request message to the MME 104. At step 406, the MME 104 performs a network access authentication procedure with the MTC device 116A. During the authentication procedure, the MME 104 downloads subscription information from the HSS 106. For example, the subscription information includes a group identifier indicating a MTC group to which the MTC belongs to.

At step 408, the MME 104 performs a NAS SMC procedure with the MTC device 116A to activate integrity protection and NAS ciphering. At step 410, the MME 104 sends an update location request to the HSS 106. At step 412, the HSS 106 sends an update location acknowledgment including subscription information associated with the MTC device 116A to the MME 104.

At step 414, the MME 104 generates a unique group key per group (Gkey) and assigns a group key index (Gki) (if not generated previously for the MTC group 114A). Also, at step 414, the MME 104 stores the group information for NAS level protection of group messages for the MTC group 114A. At step 416, the MME 104 securely communicates the unique group key information (e.g., group identifier, Gkey, and Gki) in a group SMC message to the MTC device 116A. In one embodiment, the unique group key information is protected using a NAS security context established between the MTC device 116A and the MME 104. At step 418, the MME 104 sends a create session request to the serving gateway 108 for creating a default bearer. The create session request may include IMSI, E-RAB setup list (E-RAB ID), and Group ID. At step 420, the serving gateway 108 forwards the create session request to the PDN gateway 110. The forwarded create session request may include IMSI, E-RAB ID, Group ID, S5 downlink information and so on. The S5 downlink information includes internet protocol (IP) address of the serving gateway 108 and GTP-U TEID.

Accordingly, at step 422, the PDN gateway 110 sends a create session response (e.g., including E-RAB ID, common S5 uplink information, etc.) to the serving gateway 108 in response to the create session request. The serving gateway 108 then forwards the create session response (e.g., including E-RAB ID, common S1 uplink information, etc.) to the MME 104, at step 424. At step 426, the MME 104 sends a context setup message (including NAS attach accept, E-RAB setup list, unique group key information, S1 uplink information, etc.) to the eNB 112A. At step 428, the eNB 112A stores the unique group key information for group message protection.

At step 430, the eNB 112A performs a RRC connection reconfiguration procedure with the MTC device 116A. At step 432, the MTC device 116A sends a RRC connection reconfiguration complete message to the eNB 112A. Upon completion, the eNB 112A sends a context setup response including E-RAB setup list (e.g., E-RAB ID, S1 downlink information and so on) to the MME 104, at step 434. For example, the S1 downlink information includes IP address of the eNB 112A and GTP-U TEID.

At step 436, the MME 104 sends an update session request (e.g., IMSI, E-RAB ID, S1 downlink information, etc.) to the serving gateway 108. Accordingly, at step 438, the serving gateway 108 sends an update session response to the MME 104 in response to the update session request. At step 440, communication of group messages between the MTC server 120 and the MTC device 116A is performed in a secured manner using the unique group key information, as explained in Figure 1.

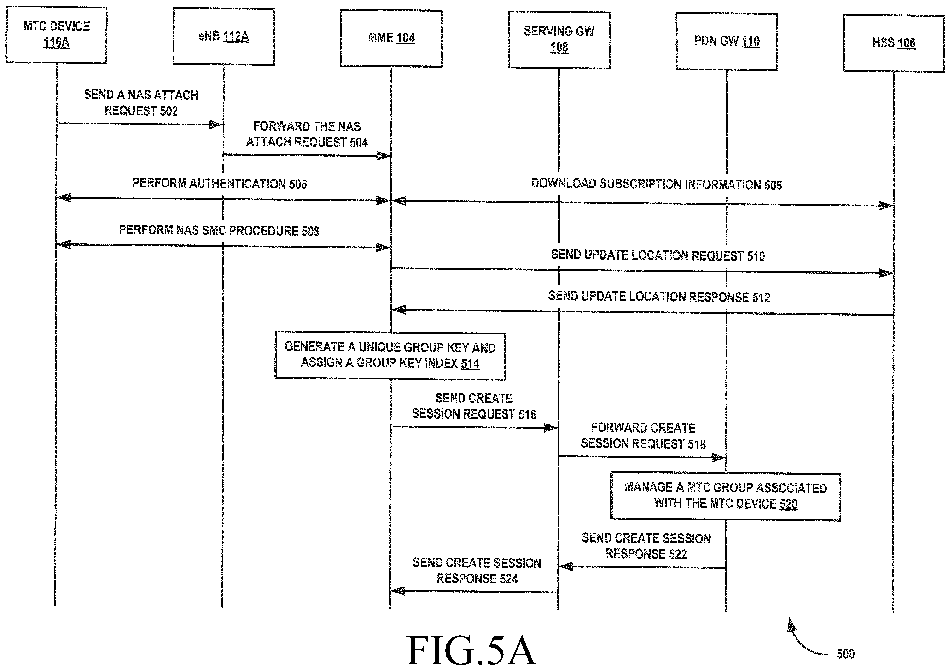

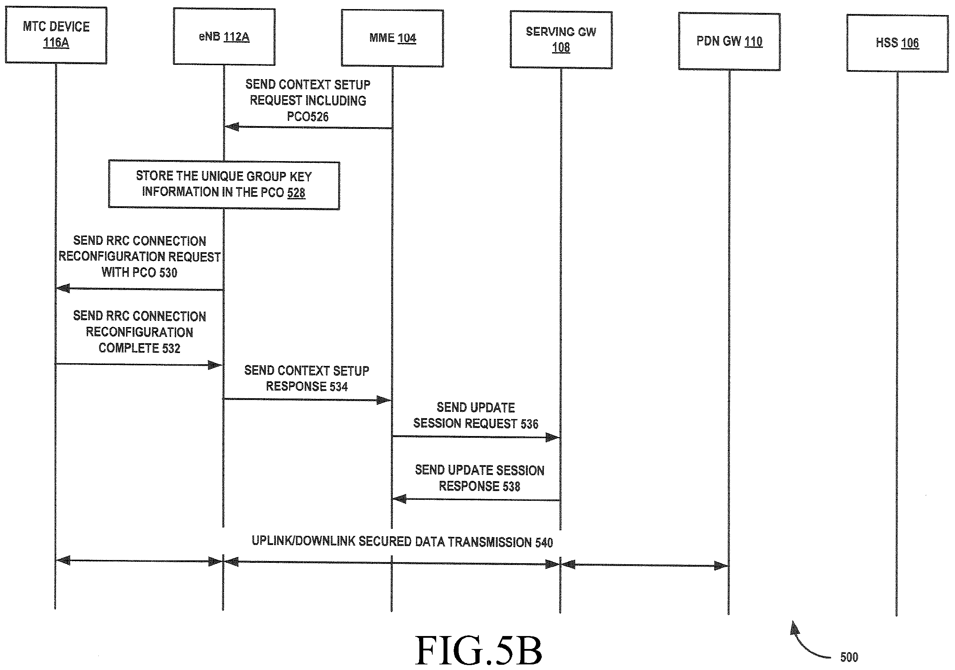

Figure 5a and 5b is a flow diagram 500 illustrating distributing a unique group key to MTC devices in a MTC group using a PCO, according to another embodiment. At step 502, a MTC device 116A sends a NAS attach request message to an eNB 112A. For example, the NAS attach request message is sent at the end of a radio resource control (RRC) connection set procedure. At step 504, the eNB 112A forwards the NAS attach request message to the MME 104. At step 506, the MME 104 performs a network access authentication procedure with the MTC device 116A. During the authentication procedure, the MME 104 request authentication vectors for an Authentication and Key Agreement (AKA) procedure from the HSS 106. It can be noted that, the HSS 106 can send one or more authentication vectors to the MME104.

At step 508, the MME 104 performs a NAS SMC procedure with the MTC device 116A to activate integrity protection and NAS ciphering. At step 510, the MME 104 sends an update location request to the HSS 106. At step 512, the HSS 106 sends an update location acknowledgment including subscription information associated with the MTC device 116A to the MME 104. In one embodiment, the HSS 106 indicates a group ID to which the MTC device 116 belongs to.

At step 514, the MME 104 generates a unique group key per group (Gkey) and assigns a group key index (Gki) or retrieves the unique group key per group (Gkey) and assigns a group key index (Gki) if already generated and stored previously for the MTC group 114A. Also, at step 514, the MME 104 stores the newly generated group information for NAS level protection of group messages for the MTC group 114A. At step 516, the MME 104 sends a create session request to the serving gateway 108 for creating a default bearer. The create session request may include IMSI, E-RAB setup list (E-RAB ID), Group ID, Gkey, Gki, supported algorithms for group message protection or MTC device capabilities for group communication, and key for group message protection at the PDN gateway 110. At step 518, the serving gateway 108 forwards the create session request to the PDN gateway 110. The forwarded create session request may include IMSI, E-RAB ID, Group ID, S5 downlink information and so on. The S5 downlink information includes internet protocol (IP) address of the serving gateway 108 and GTP-U TEID. Upon receiving the create session request, the PDN gateway 110 checks whether a common S5 uplink bearer for the MTC group 114A is existing or not. If there is no common S5 uplink bearer for the MTC group 114A, then the PDN gateway 110 creates a S5 uplink bearer.

At step 520, the PDN gateway 110 manages the MTC group 114A by assigning a particular group IP address for the MTC group 114A. Also, the PDN gateway 110 may protect the content received from the MTC subscriber at the IP layer or above the IP layer. The PDN gateway 110 also selects algorithms from the selected algorithms. At step 522, the PDN gateway 110 sends a create session response to the serving gateway 108 in response to the create session request. The create session response includes E-RAB ID, common S5 uplink information, and unique group key information in a PCO. For group based MTC feature, the PCO contains IP address (multi-cast or unicast), group identifier, selected algorithms for group based protection, Gkey, and Gki. Upon receiving the create session response, the serving gateway 108 checks whether a common S1 uplink bearer for the MTC group 114A is existing or not. If there is no common S1 uplink bearer for the MTC group 114A, then the serving gateway 108 creates a S1 uplink bearer.

The serving gateway 108 then forwards the create session response (e.g., including E-RAB ID, common S1 uplink bearer, PCO, etc.) to the MME 104, at step 524. The common S1 uplink bearer includes IP address of the serving gateway 108, and GTP-U TEID. At step 526, the MME 104 sends a context setup message (including NAS attach accept, E-RAB setup list, unique group key information, and S1 uplink information, etc.) to the eNB 112A. At step 528, the eNB 112A stores the unique group key information for group message protection. It can be noted that, the unique group key for group message protection is encrypted by the eNB 112A using an AS security context (AS ciphering).

At step 530, the eNB 112A performs a RRC connection reconfiguration procedure with the MTC device 116A. At step 532, the MTC device 116A sends a RRC connection reconfiguration complete message to the eNB 112A. In one embodiment, the RRC connection reconfiguration complete message includes the PCO. Upon completion, the eNB 112A sends a context setup response including E-RAB setup list (e.g., E-RAB ID, S1 downlink information and so on) to the MME 104, at step 534. For example, the S1 downlink information includes IP address of the eNB 112A and GTP-U TEID.

At step 536, the MME 104 sends an update session request (e.g., IMSI, E-RAB ID, S1 downlink information, etc.) to the serving gateway 108. Accordingly, at step 538, the serving gateway 108 sends an update session response to the MME 104 in response to the update session request. At step 540, communication of group messages between the MTC server 120 and the MTC device 116A is performed in a secured manner using the unique group key information, as explained in Figure 1.

The various devices, modules, selectors, estimators, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure and methods may be embodied using transistors, logic gates, and electrical circuits, such as application specific integrated circuit.

## Claims

1. A method of securing group communication in a machine-to-machine, M2M, communication environment, wherein the M2M communication environment includes a plurality of machine type communication, MTC, groups, and wherein each of the plurality of MTC groups includes MTC devices, the method comprising:
receiving, (306) by a mobile management entity, MME, (104) which secures group communication of the MTC devices, subscription information of the MTC devices associated with an MTC group, from a home subscriber server, HSS, (106) which manages the subscription information;
the method **characterized by**:
generating, (308) by the MME (104), a unique group key based on the subscription information; and
providing, (312) by the MME (104), information on the unique group key to the MTC devices associated with the MTC group for securing communication with the MTC devices associated with the MTC group in the M2M communication environment,
wherein the information on the unique group key comprises a validity period associated with the unique group key,
wherein the MTC devices receive at least one broadcast group message by using the information on the unique group key.

2. The method of claim 1, wherein the generating a unique group key comprises:
receiving a non-access stratum, NAS, attach request from an MTC device;
retrieving group identifier information associated with the MTC device, wherein the group identifier information includes at least one group identifier identifying at least one of the plurality of MTC groups associated with the MTC device;
generating the unique group key based on the subscription information; and
assigning a group key index to the unique group key.

3. The method of claim 1, wherein the communicating at least one broadcast group message comprises:
receiving the at least one broadcast group message intended for the MTC devices associated with the MTC group;
encrypting the at least one broadcast group message using the unique group key; and
broadcasting the at least one encrypted broadcast group message to the MTC devices associated with the MTC group.

4. The method of claim 3, wherein the communicating at least one broadcast group message further comprises:
receiving, by each of the MTC devices, the at least one encrypted broadcast group message from an operator network associated with the MTC group; and
decrypting, by each of the MTC devices, the at least one encrypted broadcast message using information on the unique group key.

5. The method of claim 1, wherein the providing information on the unique group key comprises:
distributing information on the unique group key substantially simultaneously to the MTC devices associated with the MTC group using a non-access stratum, NAS, security mode command procedure.

6. The method of claim 1, wherein the providing information on the unique group key comprises:
distributing information on the unique group key substantially simultaneously to the MTC devices associated with the MTC group using an MTC group security mode command procedure.

7. The method of claim 1, wherein the providing information on the unique group key comprises:
distributing information on the unique group key substantially simultaneously to the MTC devices associated with the MTC group using protocol configuration options, PCO.

8. A mobile management entity, MME (104) for securing group communication of machine type communication (MTC) devices in a machine-to-machine (M2M) communication system, the MME (104) comprising:
a communication interface for communicating with a home subscriber server, HSS, (106); and
a group key module (122) for:
receiving subscription information of the MTC devices associated with an MTC group, from the HSS (106) which manages the subscription information;
generating a unique group key based on the subscription information; and
providing information on the unique group key to at least one of the MTC devices associated with at least one MTC group for securing communication with the at least one of the MTC devices associated with the at least one MTC group,
wherein the information on the unique group key comprises a validity period associated with the unique group key,
wherein the MTC devices receives at least one broadcast group message with the at least one of the MTC devices by using information on the unique group key.

9. The method of claim 1, wherein information on the unique group key comprises a unique group key for each of the plurality of MTC groups, an index value associated with the unique group key, and a selected security algorithm for group message protection.

10. The MME (104) of claim 8, wherein the providing information on the unique group key comprises:
distributing information on the unique group key substantially simultaneously to the MTC devices associated with the at least one MTC group using a non-access stratum, NAS, security mode command procedure.

11. The MME (104) of claim 8, wherein the providing information on the unique group key comprises:
distributing information on the unique group key substantially simultaneously to the at least one of the MTC devices associated with the at least one MTC group using an MTC group security mode command procedure.

12. The MME (104) of claim 8, wherein the providing information on the unique group key comprises:
distributing information on the unique group key substantially simultaneously to the at least one of the MTC devices associated with the at least one MTC group using protocol configuration options, PCO.

13. The method of one of claim 5 and claim 6, wherein, when performing the distributing information on the unique group key substantially simultaneously to the MTC devices associated with the MTC group, information on the unique group key is secured using a non-access stratum, NAS, security context.

14. The MME (104) of one of claim 10 and claim 11, wherein, when performing the distributing information on the unique group key substantially simultaneously to the at least one of the MTC devices associated with the at least one MTC group, information on the unique group key is secured using a non-access stratum, NAS, security context.

15. The MME (104) of claim 8, wherein information on the unique group key comprises a unique group key for each of the at least one MTC group, an index value associated with the unique group key, and a selected security algorithm for group message protection.

## Patentansprüche

1. Verfahren zur Sicherung einer Gruppenkommunikation in einer Maschinezu Maschine-M2M-Kommunikationsumgebung, wobei die M2M-Kommunikationsumgebung eine Vielzahl von Maschinentypkommunikations-MTC-Gruppen umfasst und wobei jede der Vielzahl der MTC-Gruppen MTC-Vorrichtungen umfasst, wobei das Verfahren Folgendes umfasst:
Empfangen (306) durch eine mobile Verwaltungseinheit, MME, (104), die die Gruppenkommunikation der MTC-Vorrichtungen sichert, von Teilnehmerinformationen der MTC-Vorrichtungen, die einer MTC-Gruppe zugeordnet sind, von einem Home-Teilnehmerserver, HSS, (106), der die Teilnehmerinformationen verwaltet;
das Verfahren ist **gekennzeichnet durch**:
Erzeugen (308) eines eindeutigen Gruppenschlüssels durch die MME (104), basierend auf den Teilnehmerinformationen; und
Bereitstellen (312) von Informationen über den eindeutigen Gruppenschlüssel durch die MME (104), für die der MTC-Gruppe zugeordneten MTC-Vorrichtungen zum Sichern der Kommunikation mit den der MTC-Gruppe zugeordneten MTC-Vorrichtungen in der M2M-Kommunikationsumgebung;
wobei die Informationen über den eindeutigen Gruppenschlüssel einen Gültigkeitszeitraum umfassen, der dem eindeutigen Gruppenschlüssel zugeordnet ist,
wobei die MTC-Vorrichtungen mindestens eine Broadcastgruppennachricht unter Verwendung der Informationen über den eindeutigen Gruppenschlüssel empfangen.

2. Verfahren nach Anspruch 1, wobei das Erzeugen des eindeutigen Gruppenschlüssels Folgendes umfasst:
Empfangen einer Nichtzugriffsschicht-NAS-Verbindungsanforderung von einer MTC-Vorrichtung;
Abrufen von Gruppenidentifizierungsinformationen, die der MTC-Vorrichtung zugeordnet sind, wobei die Gruppenidentifizierungsinformationen mindestens eine Gruppenidentifizierung umfassen, die mindestens eine der Vielzahl von MTC-Gruppen identifiziert, die der MTC-Vorrichtung zugeordnet sind;
Erzeugen des eindeutigen Gruppenschlüssels basierend auf den Teilnehmerinformationen; und
Zuweisen eines Gruppenschlüsselindex zu dem eindeutigen Gruppenschlüssel.

3. Verfahren nach Anspruch 1, wobei das Kommunizieren mindestens einer Broadcastgruppennachricht Folgendes umfasst:
Empfangen der mindestens einen Broadcastgruppennachricht, die für die MTC-Vorrichtungen bestimmt ist, die der MTC Gruppe zugeordnet sind;
Verschlüsseln der mindestens einen Broadcastgruppennachricht unter Verwendung des eindeutigen Gruppenschlüssels; und
Übertragen der mindestens einen verschlüsselten Broadcastgruppennachricht an die MTC-Vorrichtungen, die der MTC-Gruppe zugeordnet sind.

4. Verfahren nach Anspruch 3, wobei das Kommunizieren mindestens einer Broadcastgruppennachricht des Weiteren Folgendes umfasst:
Empfangen der mindestens einen verschlüsselten Broadcastgruppennachricht von einem der MTC-Gruppe zugeordneten Betreibernetzwerk durch jede der MTC Vorrichtungen; und
Entschlüsseln der mindestens einen verschlüsselten Broadcastnachricht durch jede der MTC-Vorrichtungen, unter Verwendung von Informationen über den eindeutigen Gruppenschlüssel.

5. Verfahren nach Anspruch 1, wobei das Bereitstellen von Informationen über den eindeutigen Gruppenschlüssel Folgendes umfasst:
Verteilen von Informationen über den eindeutigen Gruppenschlüssel im Wesentlichen gleichzeitig an die MTC-Vorrichtungen, die der MTC-Gruppe zugeordnet sind, unter Verwendung einer Nichtzugriffsschicht-NAS-Sicherheitsmodus-Befehlsprozedur.

6. Verfahren nach Anspruch 1, wobei das Bereitstellen von Informationen über den eindeutigen Gruppenschlüssel das Verteilen von Informationen über den eindeutigen Gruppenschlüssel im Wesentlichen gleichzeitig an die MTC-Vorrichtungen, die der MTC-Gruppe zugeordnet sind, unter Verwendung einer MTC-Gruppensicherheitsmodus-Befehlsprozedur umfasst.

7. Verfahren nach Anspruch 1, wobei das Bereitstellen von Informationen über den eindeutigen Gruppenschlüssel Folgendes umfasst:
Verteilen von Informationen über den eindeutigen Gruppenschlüssel im Wesentlichen gleichzeitig an die MTC-Vorrichtungen, die der MTC-Gruppe zugeordnet sind, unter Verwendung von Protokollkonfigurationsoptionen, PCO.

8. Mobile Managementeinheit, MME, (104) zur Sicherung einer Gruppenkommunikation von Maschinentypkommunikations-MTC-Vorrichtungen in einem Maschine-zu-Maschine-M2M-Kommunikationssystem, wobei die MME (104) Folgendes umfasst:
eine Kommunikationsschnittstelle zum Kommunizieren mit einem Home-Teilnehmerserver, HSS, (106); und
ein Gruppenschlüsselmodul (122) zum:
Empfangen von Teilnehmerinformationen der MTC-Vorrichtungen, die einer MTC-Gruppe zugeordnet sind vom HSS (106), der die Teilnehmerinformationen verwaltet;
Erzeugen eines eindeutigen Gruppenschlüssels basierend auf den Teilnehmerinformationen; und
Bereitstellen von Informationen über den eindeutigen Gruppenschlüssel für mindestens eine der MTC-Vorrichtungen, die mindestens einer MTC-Gruppe zugeordnet sind, zum Sichern der Kommunikation mit der mindestens einen der MTC-Vorrichtungen, die der mindestens einen MTC-Gruppe zugeordnet sind;
wobei die Informationen über den eindeutigen Gruppenschlüssel einen Gültigkeitszeitraum umfassen, der dem eindeutigen Gruppenschlüssel zugeordnet ist,
wobei die MTC-Vorrichtungen mindestens eine Broadcastgruppennachricht mit der mindestens einen der MTC-Vorrichtungen unter Verwendung der Informationen über den eindeutigen Gruppenschlüssel empfangen

9. Verfahren nach Anspruch 1, wobei Informationen über den eindeutigen Gruppenschlüssel einen eindeutigen Gruppenschlüssel für jede der Vielzahl von MTC-Gruppen, einen dem eindeutigen Gruppenschlüssel zugeordneten Indexwert und einen ausgewählten Sicherheitsalgorithmus zum Schutz von Gruppennachrichten umfassen.

10. MME (104) nach Anspruch 8, wobei das Bereitstellen von Informationen über den eindeutigen Gruppenschlüssel Folgendes umfasst:
Verteilen von Informationen über den eindeutigen Gruppenschlüssel im Wesentlichen gleichzeitig an die MTC-Vorrichtungen, die der mindestens einen MTC-Gruppe zugeordnet sind, unter Verwendung einer Nichtzugriffsschicht-NAS-Sicherheitsmodus-Befehlsprozedur.

11. MME (104) nach Anspruch 8, wobei das Bereitstellen von Informationen über den eindeutigen Gruppenschlüssel Folgendes umfasst:
Verteilen von Informationen über den eindeutigen Gruppenschlüssel im Wesentlichen gleichzeitig an die mindestens eine der MTC-Vorrichtungen, die der mindestens einen MTC-Gruppe zugeordnet ist, unter Verwendung einer MTC-Gruppensicherheitsmodus-Befehlsprozedur.

12. MME (104) nach Anspruch 8, wobei das Bereitstellen von Informationen über den eindeutigen Gruppenschlüssel Folgendes umfasst:
Verteilen von Informationen über den eindeutigen Gruppenschlüssel im Wesentlichen gleichzeitig an die mindestens eine der MTC-Vorrichtungen, die der mindestens einen MTC-Gruppe zugeordnet ist, unter Verwendung von Protokollkonfigurationsoptionen, PCO.

13. Verfahren nach einem der Ansprüche 5 und 6, wobei, wenn die Informationen über den eindeutigen Gruppenschlüssel im Wesentlichen gleichzeitig an die MTC-Vorrichtungen verteilt werden, die der MTC-Gruppe zugeordnet sind, Informationen über den eindeutigen Gruppenschlüssel unter Verwendung eines Nichtzugriffsschicht-NAS-Sicherheitskontextes gesichert werden.

14. MME (104) nach einem der Ansprüche 10 und 11, wobei wenn die Informationen über den eindeutigen Gruppenschlüssel im Wesentlichen gleichzeitig an die mindestens eine der der mindestens einen MTC-Gruppe zugeordneten MTC-Vorrichtungen verteilt werden, Informationen über den eindeutigen Gruppenschlüssel unter Verwendung einer Nichtzugriffsschicht-NAS-Sicherheitskontext gesichert werden.

15. MME (104) nach Anspruch 8, wobei Informationen über den eindeutigen Gruppenschlüssel einen eindeutigen Gruppenschlüssel für jede der mindestens einen MTC-Gruppe, einen dem eindeutigen Gruppenschlüssel zugeordneten Indexwert und einen ausgewählten Sicherheitsalgorithmus zum Schutz von Gruppennachrichten umfassen.

## Revendications

1. Procédé de sécurisation d'une communication de groupe dans un environnement de communication de machine à machine, M2M, où l'environnement de communication de M2M comprend une pluralité de groupes de communication de type machine, MTC, et où chacun de la pluralité de groupes MTC comprend des dispositifs MTC, le procédé comprenant :
recevoir, (306) par une entité de gestion mobile, MME, (104) qui sécurise une communication de groupe des dispositifs MTC, des informations d'abonnement des dispositifs MTC associés à un groupe MTC, en provenance d'un serveur d'abonnés local, HSS, (106) qui gère les informations d'abonnement ;
le procédé **caractérisé par** :
la génération, (308) par la MME (104), d'une clé de groupe unique sur la base des informations d'abonnement ; et
la fourniture, (312) par la MME (104), d'informations sur la clé de groupe unique aux dispositifs MTC associés au groupe MTC afin de sécuriser une communication avec les dispositifs MTC associés au groupe MTC dans l'environnement de communication M2M,
où les informations sur la clé de groupe unique comprennent une période de validité associée à la clé de groupe unique,
où les dispositifs MTC reçoivent au moins un message de groupe de diffusion en utilisant les informations sur la clé de groupe unique.

2. Procédé selon la revendication 1, où la génération de la clé de groupe unique comprend :
recevoir une demande de rattachement de couche de non-accès, NAS, d'un dispositif MTC ;
récupérer des informations d'identifiant de groupe associées au dispositif MTC, où les informations d'identifiant de groupe comprennent au moins un identifiant de groupe identifiant au moins l'un de la pluralité de groupes MTC associés au dispositif MTC ;
générer la clé de groupe unique sur la base des informations d'abonnement ; et
attribuer un indice de clé de groupe à la clé de groupe unique.

3. Procédé selon la revendication 1, où la communication d'au moins un message de groupe de diffusion comprend :
recevoir l'au moins un message de groupe de diffusion destiné aux dispositifs MTC associés au groupe MTC ;
crypter l'au moins un message de groupe de diffusion en utilisant la clé de groupe unique ; et
diffuser l'au moins un message de groupe de diffusion crypté aux dispositifs MTC associés au groupe MTC.

4. Procédé selon la revendication 3, où la communication d'au moins un message de groupe de diffusion comprend en outre :
recevoir, par chacun des dispositifs MTC, l'au moins un message de groupe de diffusion crypté en provenance d'un réseau d'opérateur associé au groupe MTC ; et
décrypter, par chacun des dispositifs MTC, l'au moins un message de diffusion crypté en utilisant des informations sur la clé de groupe unique.

5. Procédé selon la revendication 1, où la fourniture d'informations sur la clé de groupe unique comprend :
distribuer des informations sur la clé de groupe unique pratiquement simultanément aux dispositifs MTC associés au groupe MTC en utilisant une procédure de commande en mode de sécurité de couche de non-accès, NAS.

6. Procédé selon la revendication 1, où la fourniture d'informations sur la clé de groupe unique comprend :
la distribution d'informations sur la clé de groupe unique pratiquement simultanément aux dispositifs MTC associés au groupe MTC en utilisant une procédure de commande en mode de sécurité de groupe MTC.

7. Procédé selon la revendication 1, où la fourniture d'informations sur la clé de groupe unique comprend :
distribuer des informations sur la clé de groupe unique pratiquement simultanément aux dispositifs MTC associés au groupe MTC en utilisant des options de configuration de protocole, PCO.

8. Entité de gestion mobile, MME, (104) pour sécuriser une communication de groupe de dispositifs de communication de type machine, MTC, dans un système de communication machine à machine, M2M, la MME (104) comprenant :
une interface de communication pour communiquer avec un serveur d'abonnés local, HSS, (106) ; et
un module de clé de groupe (122) pour :
recevoir des informations d'abonnement des dispositifs MTC associés à un groupe MTC, en provenance du HSS (106) qui gère les informations d'abonnement ;
générer une clé de groupe unique sur la base des informations d'abonnement ; et
fournir des informations sur la clé de groupe unique à au moins l'un des dispositifs MTC associés à au moins un groupe MTC afin de sécuriser une communication avec l'au moins un des dispositifs MTC associés à l'au moins un groupe MTC,
où les informations sur la clé de groupe unique comprennent une période de validité associée à la clé de groupe unique,
où les dispositifs MTC reçoivent au moins un message de groupe de diffusion avec l'au moins un des dispositifs MTC en utilisant des informations sur la clé de groupe unique.

9. Procédé selon la revendication 1, où des informations sur la clé de groupe unique comprennent une clé de groupe unique pour chacun de la pluralité de groupes MTC, une valeur d'indice associée à la clé de groupe unique et un algorithme de sécurité sélectionné pour la protection de messages de groupe.

10. MME (104) selon la revendication 8, où la fourniture d'informations sur la clé de groupe unique comprend :
distribuer des informations sur la clé de groupe unique pratiquement simultanément aux dispositifs MTC associés à l'au moins un groupe MTC en utilisant une procédure de commande en mode de sécurité de couche de non-accès, NAS.

11. MME (104) selon la revendication 8, où la fourniture d'informations sur la clé de groupe unique comprend :
distribuer des informations sur la clé de groupe unique pratiquement simultanément à l'au moins un des dispositifs MTC associés à l'au moins un groupe MTC en utilisant une procédure de commande en mode de sécurité de groupe MTC.

12. MME (104) selon la revendication 8, où la fourniture des informations sur la clé de groupe unique comprend :
distribuer des informations sur la clé de groupe unique pratiquement simultanément à l'au moins un des dispositifs MTC associés à l'au moins un groupe MTC en utilisant des options de configuration de protocole, PCO.

13. Procédé selon l'une de la revendication 5 et la revendication 6, où, lors de la mise en œuvre de la distribution des informations sur la clé de groupe unique pratiquement simultanément aux dispositifs MTC associés au groupe MTC, des informations sur la clé de groupe unique sont sécurisées en utilisant un contexte de sécurité de couche de non-accès, NAS.

14. MME (104) selon l'une de la revendication 10 et la revendication 11, où, lors de la mise en œuvre de la distribution des informations sur la clé de groupe unique pratiquement simultanément à l'au moins un des dispositifs MTC associés à l'au moins un groupe MTC, des informations sur la clé de groupe unique sont sécurisées en utilisant un contexte de sécurité de couche de non-accès, NAS.

15. MME (104) selon la revendication 8, où des informations sur la clé de groupe unique comprennent une clé de groupe unique pour chacun de l'au moins un groupe MTC, une valeur d'indice associée à la clé de groupe unique et un algorithme de sécurité sélectionné pour la protection de messages de groupe.
